# EUROPEAN PATENT SPECIFICATION

(11) **EP 0 748 740 B1**
(45) Date of publication and mention of the grant of the patent: **15.12.1999**
(21) Application number: 96108429.0
(22) Date of filing: 28.05.1996
(51) Int. Cl.: B65B 27/00, B65G 57/00

(54) **Method for storing building materials and product obtained with said method**
Verfahren zum Speichern von Baumaterialien und dabei erzieltes Produkt
Procédé de stockage de matériau de construction et produit obtenu

(30) Priority: 13.06.1995 IT TV950070
(43) Date of publication of application: 18.12.1996
(73) Proprietor: FASSA S.p.A, 31027 Spresiano, Treviso (IT)
(72) Inventor: Mussato, Fausto, 31030 Arcade (Treviso) (IT)
(74) Representative: Modiano, Guido, Dr.-Ing.

(56) References cited:
- DE-A- 2 341 644
- FR-A- 1 245 523
- US-A- 2 197 845

## Description

The present invention relates to a method for storing building materials, particularly of the type constituted by putty and/or by a composition of slaked lime mixed with water.

Building materials, such as putty and/or slaked lime mixed with water, are currently packaged in individual and separate bags made of polyethylene, or another adapted material, by using packaging machines of the type with heat-sealing bars.

The bags that are obtained are then stored in iron or wood containers for storage and remain therein also for the time required to ship them for delivery.

The need to use containers arises from the instability that the bags have, since they contain products having no intrinsic rigidity.

This known system for storing and shipping building products, however, has drawbacks; the containers must have dimensions that are adapted for the bags, and this entails a considerable problem for storing and managing said containers within the factory as well as a considerable initial investment to purchase them.

Storing the containers, whether empty or filled with bags, requires the use of large specifically provided spaces, whereas transporting them within the factory entails the use of appropriate transport machines, both when the containers are made of iron and when they are made of wood.

Another drawback is due to a high shipping cost, since it is necessary to take into account both the goods and the tare; furthermore, it is necessary to take into account the additional cost for collecting said containers after sale.

Another drawback is due to the hindrance that the container causes to the user when he removes the bags placed on the bottom.

Furthermore, the bags are arranged in a completely haphazard fashion in the containers, and this can of course lead to accidental breakages of said containers, causing the escape of the material contained therein.

A principal aim of the present invention is to solve the above-described technical problems, eliminating the drawbacks of the mentioned prior art (see also US-A-2 197 845), providing a method for storing building products that allows to reduce initial investment costs.

Within the scope of this aim, another object is to provide a method that allows to reduce the shipping cost of the products to be delivered.

Another important object is to provide a method that allows optimum arrangement of the packaged product, reducing space occupation.

Another object is to provide a method that allows the packaged product to have optimum stability throughout storage and transport.

Another important object is to provide a method that is simple and safe to perform.

Another important object is to provide a method that allows to achieve an optimum arrangement of the contained material, allowing it to be easily gripped by the user.

Another object is to provide a method that can be obtained with low costs by using conventional machines and equipment.

This aim, these objects, and others which will become apparent hereinafter are achieved by a method for storing building materials, particularly of the type constituted by putty and/or a compound of slaked lime mixed with water, characterized in that it comprises the following steps:
a) packaging said building materials in mutually interconnected bags and/or containers;
b) pre-scoring the region that connects two of said bags and/or containers that are adjacent;
c) dividing said bags and/or containers into groups constituted by at least two of said bags and/or containers;
d) arranging two or more of said groups side by side on a pallet, so as to form a first layer;
e) arranging, above said first layer, along an axis that is approximately perpendicular thereto, a second layer constituted by two or more additional said groups arranged side by side;
f) arranging optional additional layers, arranged along an axis that is approximately perpendicular to the axis of the underlying layer; and
g) applying means for temporarily retaining said layers on said pallet.

Further characteristics and advantages of the method will become apparent from the following detailed description of a preferred but not exclusive embodiment thereof, illustrated only by way of non-limitative example in the accompanying drawings, wherein:
figure 1 is a lateral perspective view of a product produced with the method according to the present invention;
figure 2 is a top view of a layer produced by means of two adjacent groups;

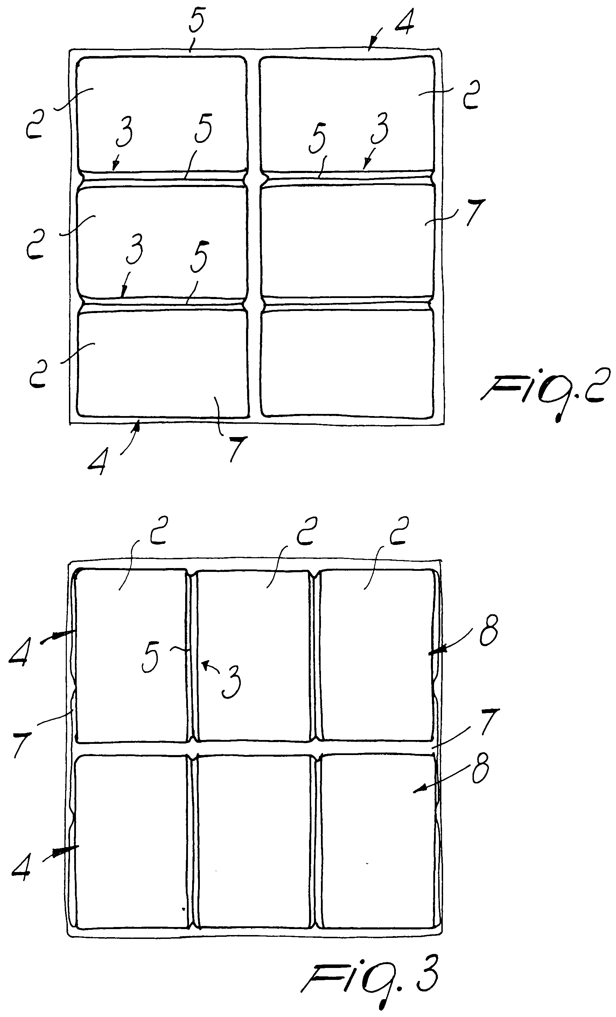

figure 3 is a top view of a layer that is arranged so that its axis is at right angles to the axis of figure 2.

With reference to the above figures, the reference numeral 1 designates a product obtained by virtue of the method, according to the present invention, for storing building materials, such as for example mortar or wet lime putty composed of slaked lime mixed with water.

This method for obtaining the product 1 entails a first step of packaging said building material in individual bags and/or containers 2 that are interconnected by means of a connecting band or region 3 that is accordingly adapted to form a group 4 of two or three or more of said bags or containers 2 arranged along the same axis.

Said connecting region 3 allows to perform, in a second step, a pre-scoring 5 adapted to facilitate, in the subsequent third step, the determination of the number of bags constituting the desired group 4.

The number of bags or containers 2 that constitute each group 4 must be determined according to the specific storage and/or shipping requirements.

In a fourth step, two groups 4, for example, are arranged side by side on a pallet 6 and are thus adapted to form a first layer 7.

The pallet 6 is constituted by a flat footing, which is produced by arranging side by side boards that are generally made of wood; the footing is raised by means of appropriate spacers 6a and is adapted to allow the stacking of the products as well as easy transport thereof.

In a fifth step of the method according to the present invention, a second layer 8, formed by arranging two groups 4 of bags and/or containers 2 side by side, is arranged above the first layer 7 along an axis that is approximately perpendicular to said first layer.

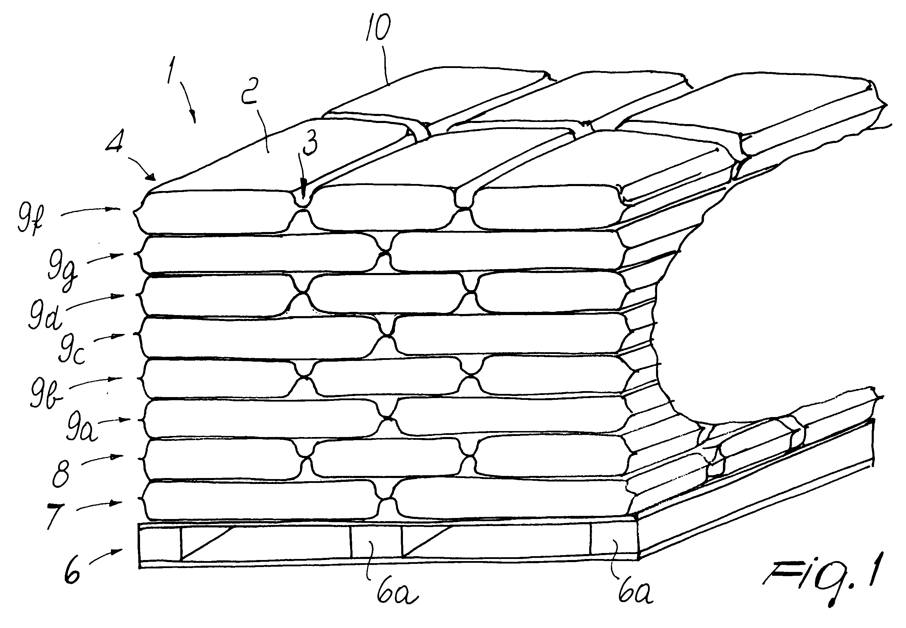

Then, by means of a sixth step, it is possible to stack the bags and/or containers 2, arranged according to the preselected groups 4, forming successive layers, designated in the specific embodiment by the reference numerals 9a, 9b, 9c, 9d, 9e, and 9f, each whereof is arranged so that its axis is perpendicular to the axis of the underlying layer, as shown in figure 1.

A seventh step entails associating the various layers thus obtained with the pallet 6 by using adapted retention means 10.

Said retention means 10 are constituted by a shrink-wrap film arranged so as to fully wrap around the product 1; adapted straps can be used as an alternative.

It has thus been observed that the described method has achieved the intended aim and objects, a product 1 having been provided which allows to reduce initial investment costs and delivery shipping costs, since a pallet 6 is used which is cheap and can be handled easily both for shipping and for storage.

Furthermore, the arrangement of the groups 4 in layers 9 allows to reduce space occupation and at the same time allows the user to easily grip each bag and/or container 2.

The retention of the layers on the pallet allows optimum stability for all the layers both during shipping and for storage.

The invention is of course susceptible of numerous modifications and variations within the scope of the claims.

The materials and the dimensions that constitute the individual components of the device may of course also be the most appropriate according to the specific requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for storing building materials, particularly of the type constituted by putty and/or a compound of slaked lime mixed with water, characterized in that it comprises the following steps:
a) packaging said building materials in interconnected bags and/or containers;
b) pre-scoring the region that connects two of said bags and/or containers that are adjacent;
c) dividing said bags and/or containers into groups constituted by at least two of said bags and/or containers;
d) arranging two or more of said groups side by side on a pallet, so as to form a first layer;
e) arranging, above said first layer, along an axis that is approximately perpendicular thereto, a second layer constituted by two or more additional said groups arranged side by side;
f) arranging optional additional layers, arranged along an axis that is approximately perpendicular to the axis of the underlying layer; and
g) applying means for temporarily retaining said layers on said pallet.

2. A method according to claim 1, characterized in that it comprises a first step of packaging said building material in individual bags and/or containers that are interconnected by means of a connecting band or region adapted to form at least one group of two or three or more of said bags or containers arranged along the same axis.

3. A method according to claim 2, characterized in that said second step entails, at said connecting region or band, at least one pre-scoring adapted to facilitate, during the subsequent third step, the separation and the determination of the number of said bags constituting the desired group.

4. A method according to claim 3, characterized in that said group preferably provides for the side-by-side arrangement of three bags and/or containers.

5. A method according to claim 1, characterized in that said means for temporarily retaining being constituted by a shrink-wrap film, arranged so as to fully wrap around said layers.

6. A method according to claim 5, characterized in that said means for temporarily retaining are constituted by straps.

7. A product obtained with the method as claimed in claims 1-6, characterized in that it is constituted by a pallet that supports two or more layers of two or more side-by-side groups of bags and/or containers for building materials, said two or more layers being arranged on top of each other and being orientated along axes that are rotated through approximately 90^{o} and being associated with said pallet by virtue of temporary retention means.

## Patentansprüche

1. Verfahren zur Speicherung von Baumaterialien, insbesondere der Art, welche gebildet werden durch Kitt und/oder eine Mischung von mit Wasser vermischtem gelöschtem Kalk, **dadurch gekennzeichnet**, daß es folgende Schritte umfaßt:
a) Verpacken der Baumaterialien in miteinander verbundene Säcken und/oder Containern;
b) Vorzählen des Bereichs, welcher zwei dieser Säcke und/oder Container, die einander benachbart sind, verbindet;
c) Unterteilen dieser Säcke und/oder Container in Gruppen, welche durch mindestens zwei dieser Säcke und/oder Container gebildet werden;
d) Anordnung von zwei oder mehrerer dieser Gruppen Seite an Seite auf einer Palette, um eine erste Schicht zu bilden;
e) Anordnen oberhalb dieser ersten Schicht längs einer Achse, welche näherungsweise rechtwinklig zu ihr ist, eine zweite Schicht, welche durch zwei oder mehrere zusätzliche, Seite an Seite angeordnete, Gruppen gebildet wird;
f) Anordnen von optionalen, zusätzlichen Schichten, welche längs einer Achse angeordnet sind, welche näherungsweise rechtwinklig zur Achse der darunterliegenden Schicht verläuft und
g) Anlegen von Mitteln zum zeitweiligen Festhalten dieser Schichten auf dieser Palette.

2. Verfahren nach Anspruch 1, **dadurch gekennzeichnet**, daß es einen ersten Schritt des Verpackens des Baumaterials in einzelne Säcke und/oder Container umfaßt, die mittels eines Verbindungsbands oder Bereichs miteinander verbunden sind zur Bildung mindestens einer Gruppe von zwei oder drei oder mehreren dieser Säcke und/oder Container, welche längs der gleichen Achse angeordnet sind.

3. Verfahren nach Anspruch 2, **dadurch gekennzeichnet**, daß der zweite Schritt beim Verbindungsbereich oder -band mindestens ein Vorzählen umfaßt, das so angepaßt ist, um während des folgenden dritten Schritts die Trennung und die Bestimmung der Anzahl diese Säcke, welche die gewünschte Gruppe bilden, zu erleichtern.

4. Verfahren nach Anspruch 3, **dadurch gekennzeichnet**, daß die Gruppen bevorzugt eine Seite an Seite Anordnung von drei Säcken und/oder Behältern bilden.

5. Verfahren nach Anspruch 1, **dadurch gekennzeichnet**, daß die Mittel zum zeitweiligen Festhalten gebildet werden durch eine Schrumpfumhüllungsfolie, welche zur völlständigen Umhüllung um die Schichten angepaßt ist.

6. Verfahren nach Anspruch 5, **dadurch gekennzeichnet**, daß die Mittel zum zeitweiligen Festhalten gebildet werden durch Bänder.

7. Ein nach dem Verfahren, wie in den Ansprüchen 1 bis 6 beansprucht, erzieltes Produkt, **dadurch gekennzeichnet**, daß es gebildet wird durch eine Palette, welche zwei oder mehrere Schichten von zwei oder mehreren Seite an Seite angeordneten Gruppen von Säcken und/oder Behältern für Baumaterialien trägt, wobei zwei oder mehrere Schichten übereinander angeordnet sind und längs ihrer Achsen orientiert sind, welche um näherungsweise 90° gedreht sind und mit dieser Palette durch zeitweilige Festhaltemittel verbunden sind.

## Revendications

1. Procédé de stockage de matériaux de construction, en particulier du type constitué par du mastic et/ou par un composé constitué de chaux éteinte mélangée avec de l'eau, caractérisé en ce qu'il comporte les étapes consistant à :
(a) emballer lesdits matériaux de construction dans des sacs et/ou conteneurs reliés entre eux ;
(b) pré-découper la région qui relie deux desdits sacs et/ou conteneurs qui sont adjacents ;
(c) diviser lesdits sacs et/ou conteneurs en groupes constitués par au moins deux desdits sacs et/ou conteneurs ;
(d) disposer côte à côte deux ou plus de deux desdits groupes sur une palette, de manière à former une première couche ;
(e) disposer, au-dessus de ladite première couche, suivant un axe qui lui est à peu près perpendiculaire, une deuxième couche constituée de deux ou de plus de deux autres groupes disposés côte à côte ;
(f) disposer d'autres couches optionnelles, disposées suivant un axe qui est à peu près perpendiculaire à l'axe de la couche sous-jacente ; et
(g) appliquer des moyens pour retenir temporairement lesdits couches sur ladite palette.

2. Procédé selon la revendication 1, caractérisé en ce qu'il comporte une première étape consistant à emballer ledit matériau de construction dans des sacs et/ou conteneurs individuels qui sont reliés entre eux par l'intermédiaire d'une bande ou région de connexion adaptée pour former au moins un groupe de deux ou de trois ou de plus de trois desdits sacs ou conteneurs disposés suivant le même axe.

3. Procédé selon la revendication 2, caractérisé en ce que ladite deuxième étape implique, au niveau de ladite région ou bande de connexion, au moins une pré-découpe adaptée pour faciliter, durant la troisième étape suivante, la séparation et la détermination du nombre desdits sacs constituant le groupe souhaité.

4. Procédé selon la revendication 3, caractérisé en ce que ledit groupe permet d'une manière préférée la disposition côte à côte de trois sacs et/ou conteneurs.

5. Procédé selon la revendication 1, caractérisé en ce que lesdits moyens pour retenir temporairement sont constitués d'un film rétractable, disposé de manière à venir s'enrouler intégralement autour desdites couches.

6. Procédé selon la revendication 5, caractérisé en ce que lesdits moyens pour retenir temporairement sont constitués de sangles.

7. Produit obtenu grâce au procédé selon les revendications 1 à 6, caractérisé en ce qu'il est constitué d'une palette qui supporte deux ou plus de deux couches de deux ou de plus de deux groupes, disposés côte à côte, de sacs et/ou conteneurs destinés à des matériaux de construction, lesdites deux couches ou plus de deux couches étant disposées les unes au-dessus des autres et étant orientées suivant des axes séparés d'un angle d'environ 90°C et étant associées à ladite palette au moyen de moyens de rétention temporaire.
